# EUROPÄISCHE PATENTSCHRIFT

(11) **EP 1 931 938 B1**
(45) Veröffentlichungstag und Bekanntmachung des Hinweises auf die Patenterteilung: **02.02.2011**
(21) Anmeldenummer: 06791850.8
(22) Anmeldetag: 06.09.2006
(51) Int. Cl.: G01B 7/00, B23Q 11/04

(54) **WECHSELEINRICHTUNG**
CHANGING DEVICE
SUPPORT D'ELEMENTS INTERCHANGEABLES

(30) Priorität: 13.09.2005 DE 102005043454
(43) Veröffentlichungstag der Anmeldung: 18.06.2008
(73) Patentinhaber: Carl Zeiss Industrielle Messtechnik GmbH, 73447 Oberkochen (DE)
(72) Erfinder: ENDERLE, Eckhard, 73434 Aalen (DE); BINDER, Stefan Andre, 73447 Oberkochen (DE)
(74) Vertreter: Gauss, Nikolai
(86) Internationale Anmeldenummer: PCT/EP2006/008657
(87) Internationale Veröffentlichungsnummer: WO 2007/031218

(56) Entgegenhaltungen:
- DE-A1- 2 712 181
- DE-A1- 3 545 330
- US-A- 5 505 005

## Beschreibung

Die vorliegende Erfindung betrifft eine Wechseleinrichtung zur auswechselbaren Aufnahme eines Sensors, Tastelements oder Werkzeugs an einer Maschine oder einem Maschinenteil. Derartige Wechseleinrichtungen dienen beispielsweise dazu, um bei Koordinatenmessgeräten Drehschwenkeinrichtungen, Sensoren wie Tastköpfe oder Taststiftsätze automatisiert auswechselbar am Koordinatenmessgerät aufzunehmen. Die Wechseleinrichtungen können jedoch auch dazu eingesetzt werden, um an Bearbeitungsmaschinen unterschiedliche Werkzeuge aufzunehmen.

Bekannte Wechseleinrichtungen sind dabei so ausgebildet, dass das aufgenommene Bauteil nach jedem Wechsel reproduzierbar an der Maschine aufgenommen ist, sodass keine Neukalibrierung des aufgenommenen Bauteils erforderlich ist und die mit verschiedenen Sensoren oder verschiedenen Taststiften aufgenommenen Messwerte ohne eine zwischengeschaltete Kalibrierung miteinander kombiniert werden können.

Wechseleinrichtungen für Koordinatenmessgeräte oder Bearbeitungsmaschinen sind beispielsweise aus der US 4637119, USA 4649623, US 46888307, US 5041806, US 4,651,405, US 4738033, US 4,254,554 und DE 38 27 656 bekannt.

Bei den Wechseleinrichtungen nach den US 4637119, USA 4649623, US 4688307 und US 5041806 erfolgt die Spannung des aufzunehmenden Bauteils an der Aufnahme durch Magnetkraft. Bei der in der DE 38 27 656 beschriebenen Anordnung erfolgt die Spannung des aufzunehmenden Bauteils an der Aufnahme durch eine Unterdrucksaugglocke und bei den Anordnungen nach der US 4,651,405 und der US 4738033 erfolgt jeweils die Spannung anderweitig mechanisch. Die magnetische Spannung des aufzunehmenden Bauteils nach den US 4637119, USA 4649623, US 4688307 und US 5041806 sowie das Ansaugen des aufzunehmenden Bauteils gemäß der DE 38 27 656 ist dabei besonders für automatische Wechseieinrichtungen geeignet, bei denen die Maschine computergesteuert das auszuwechselnde Bauteil, beispielsweise den auszuwechselnden Sensor, in einem Magazin ablegt und einen neuen Sensor aus einem Magazin aufnimmt, ohne dass der Operateur beim Wechselvorgang selbst eingreifen muss. Wird bei diesen Wechseleinrichtungen jedoch das Abwerfen des Sensors oder des anderen aufgenommenen Bauteils unbeabsichtigt ausgelöst, ohne dass zuvor das Magazin angefahren wurde, kann es leicht zu unbeabsichtigten Beschädigungen des Sensors kommen, wenn dieser aus größerer Höhe abgeworfen wird und herunter fällt. Deshalb ist es beispielsweise von der Dreh-Schwenkeinrichtung der Anmelderin bekannt, die magnetische Spannung noch mit einer mechanischen Verriegelung zu kombinieren, wobei für das Entfernen des aufgenommenen Sensors oder der aufgenommenen Dreh-Schwenkeinrichtung entweder von Hand die Verriegelung gelöst werden muss oder diese beim Ablegen der Dreh-Schwenkeinrichtung oder des Sensors im Magazin automatisch gelöst wird. Um jedoch im Falle einer unbeabsichtigten Kollision während des Messvorgangs durch die Verriegelungseinrichtung und die dadurch gewährleistete starre Kopplung zwischen dem aufgenommenen Bauteil und der Maschine übermäßige Beschädigungen zu vermeiden, ist die Verriegelung wieder so ausgelegt, dass sie bei überschreiten einer bestimmten Kraft automatisch entriegelt. Im Kollisionsfalle kann es dann wieder dazu kommen, dass der aufgenommene Sensor abfällt und beim nachfolgenden Aufschlagen beschädigt wird.

Bei der Anordnung nach der US 4,254,554 wird das aufzunehmende Bauteil durch ein vorgespanntes Stahlseil gegen das eine reproduzierbare Aufnahme des aufzunehmenden Bauteils gewährleistende Dreipunktlager gezogen. Diese Anordnung hat den Vorteil, dass im Falle einer Kollision das aufzunehmende Bauteil aus dem Lager herausgehoben werden kann, ohne dass dadurch das aufzunehmende Bauteil ganz von der Maschine getrennt wird. Diese Anordnung ist jedoch nicht für einen manuellen oder automatisierten Wechsel geeignet.

In US 5,505,005 ist eine Wechseleinrichtung zur auswechselbaren Aufnahme eines Sensors, Tastelements oder Werkzeugs an einer Maschine oder einem Maschinenteil offenbart. Die Wechseleinrichtung weist eine Aufnahme auf, die ein erstes Lager aufweist, ein an der Aufnahme aufnehmbares Gegenstück, das ein zweites, zum ersten Lager korrespondierendes Gegenlager aufweist, und eine lösbare Spanneinrichtung, die bei an der Aufnahme aufgenommenem Gegenstück eine Spannkraft zwischen dem ersten Lager und dem Gegenlager erzeugt.

Es ist die Aufgabe der vorliegenden Erfindung, eine Wechseleinrichtung zur auswechselbaren Aufnahme von Sensoren, Tastelementen, Werkzeugen oder Drehschwenkeinrichtungen anzugeben, die einerseits einen automatisierten Wechselvorgang ermöglicht, andererseits jedoch im Kollisionsfall ein Abreißen des aufgenommenen Sensors, Tastelements, Werkzeugs oder der Dreh-Schwenkeinrichtung vermeidet.

Dieses Ziel wird erfindungsgemäß durch eine Wechseleinrichtung mit den Merkmalen des Anspruches 1 gelöst. Vorteilhafte Ausführungsformen der Erfindung ergeben sich aus den Merkmalen der abhängigen Ansprüche.

Die erfindungsgemäße Wechseleinrichtung weist eine Aufnahme mit einem ersten Lager auf. Des Weiteren weist die Wechseleinrichtung ein Gegenstück auf, das an der Aufnahme aufzunehmen ist und ein zweites Lager aufweist, das zum ersten Lager korrespondiert. Das Lager der Aufnahme und das korrespondierende Gegenlager am Gegenstück sind dabei in bekannter Weise so ausgebildet, dass das Trennen und Wiederaufnehmen von Aufnahme und Gegenstück reproduzierbar erfolgt. Es ist eine lösbare Spanneinrichtung vorgesehen, die bei an der Aufnahme aufgenommenem Gegenstück eine Spannkraft zwischen dem ersten und dem zweiten Lager erzeugt. Des Weiteren ist eine Verrieglungseinrichtung vorgesehen, die ein erstes Verschlusselement an der Aufnahme und ein zweites, zum ersten Verschlusselement korrespondierendes Verschlusselement am Gegenstück aufweist und mit der das Gegenstück im an der Aufnahme aufgenommenen Zustand mit der Aufnahme mechanisch koppelbar ist. Das Verschlusselement an der Aufnahme ist an einer Trennstelle an der Aufnahme aufgenommen und darüber hinaus ist ein Sicherungselement vorgesehen, durch das eine Trennung der Trennstelle über eine vorbestimmte Distanz hinaus verhindert ist

Die Verschlusselemente sollten dabei so ausgelegt sein, dass durch die Verriegelungseinrichtung keine zusätzliche Spannkraft zwischen dem ersten Lager der Aufnahme und dem Gegenlager des Gegenstücks erzeugt wird.

Durch die Verriegelungseinrichtung ist die Wechseleinrichtung gegen ein unbeabsichtigtes Lösen des aufgenommenen Bauteils gesichert. Die Verriegelungseinrichtung kann dabei mechanisch ausgebildet sein, beispielsweise durch einen Zapfen, der eine Nute aufweist, und in die ein Sicherungsschieber eingreift. Es sind jedoch auch viele andere Verriegelungseinrichtungen, z.B. ein in eine Nute eingreifender Haken u.s.w. möglich. Die Verriegelungseinrichtung sollte jedoch so ausgebildet sein, dass sie bei aufgenommenem Gegenstück automatisch verriegelt und bei einem beabsichtigten Ablegen des aufgenommenen Bauteils automatisch entriegelt.

Die Trennstelle für das Verschlusselement der Aufnahme ist ein Sitz an der Aufnahme, in dem das Verschlusselement der Aufnahme im normalen Betrieb der Wechseleinrichtung sitzt. Kommt es jedoch zu einer unbeabsichtigten Kollision, wird das Verschlusselement an der Trennstelle aus dem Sitz an der Aufnahme heraus gehoben. Dazu sollte die Trennstelle bzw. der Sitz für das Verschlusselement im Bereich der Ebene angeordnet sein, die durch das Lager der Aufnahme definiert ist. Das aufgenommene Bauteil kann daher aus dem Lager herausgehoben werden. Durch das Sicherungselement ist gewährleistet, dass auch bei aus dem Lager herausgehobenem aufgenommenem Bauteil dieses nicht einfach herunterfällt, sondern trotz der Trennung weiterhin gehalten wird bis die vorbestimmte Distanz erreicht ist. Die vorbestimmte Distanz ist dabei in Abhängigkeit von der Maschinensteuerung so ausgelegt, dass selbst dann, wenn die Maschine mit maximaler Geschwindigkeit vor der Kollision verfährt, die Maschinenantriebe innerhalb der vorbestimmten Distanz gestoppt werden können, wenn ein Kollisionsfall registriert worden ist.

Die Aufnahme kann am Sensor, am Tastelement, am Werkzeug oder an einer Dreh-Schwenkeinrichtung angeordnet sein. Alternativ dazu kann das Gegenstück am Sensor, am Tastelement, am Werkzeug oder an der Dreh-Schwenkeinrichtung angeordnet sein.

Das Sicherungselement kann ein Seil sein, das mit dem Verschlusselement der Aufnahme verbunden ist. Vorzugsweise ist das Seil entweder selbst elastisch, sodass es sich über die vorbestimmte Distanz dehnen kann. Alternativ dazu kann das Seil auch an der der Trennstelle gegenüber liegenden Seite beweglich angebunden und vorgespannt sein. Die Vorspannung kann durch Federkraft, pneumatisch, hydraulisch, magnetisch oder elektrisch erzeugt sein. Wenn das Seil elastisch ist oder die der Trennstelle gegenüberliegende Seilaufnahme verschiebbar und vorgespannt ist, hat dieses den Vorteil, dass im Normalfall, also wenn kein Kollisionsfall vorliegt, die Vorspannung oder die Elastizität des Seils zu einem Schließen der Trennstelle führt. Das Verschlusselement der Aufnahme sitzt dann immer in einem definierten Zustand in seinem Sitz an der Aufnahme, was den Wechselvorgang, insbesondere das Verriegeln durch das zum Verschlusselement der Aufnahme korrespondierende Verschlusselement am Gegenstück vereinfacht. Grundsätzlich ist es jedoch auch möglich, ein nicht vorgespanntes und nicht elastisches Seil als Sicherungselement zu verwenden, wenn mittels der Schwerkraft dafür gesorgt wird, dass im Normalfall, wenn kein Kollisionsfall vorliegt, die Trennstelle geschlossen ist.

Für eine kompakte Bauweise hat es sich als besonders vorteilhaft herausgestellt, wenn für die Vorspannung des Seils eine Druckfeder vorgesehen ist.

Die Trennstelle des Sicherungselements sollte als konische bzw. kegelförmige oder sphärische Trennstelle ausgeführt sein, die nahe der Ebene positioniert ist, die durch das Lager der Aufnahme definiert ist. Eine konische Trennstelle lässt sich dadurch realisieren, dass das Verschlusselement der Aufnahme einen Kegel aufweist und an der Aufnahme ein hohlkegelförmiger Sitz für den Kegel des Verschlusselements vorgesehen ist. Eine sphärische Trennstelle lässt sich entsprechend dadurch erreichen, dass das Verschlusselement einen Ausschnitt einer Kugeloberfläche aufweist und an der Aufnahme ein hohlkugelförmiger Sitz für die Kugeloberfläche des Verschlusselements vorgesehen ist, in den das Verschlusselement mit seiner Kugeloberfläche eingreift. Eine konische oder sphärische Trennstelle liefert den Vorteil, dass auch bei auftretenden seitlichen Scheerkräften die Trennung des Verschlusselements an der Trennstelle leicht erfolgt.

Wie beim Stand der Technik kann das Verschlusselements des Gegenstücks ein vorgespannter Schieber sein, der in eine Nute des Verschlusselements eingreift. Durch die Vorspannung des Schiebers befindet sich dieser immer, wenn keine Kräfte von außen auf den Schieber ausgeübt werden, in der aritierenden Position.

Die erfindungsgemäße Wechseleinrichtung findet vorzugsweise Einsatz im Zusammenhang mit Koordinatenmessgeräten, die eine in einer oder mehreren Raumrichtungen computergesteuert bewegbare und/oder um ein oder mehrere Raumrichtungen computergesteuert drehbare Aufnahme für einen Sensor aufweisen. Besonders bevorzugt ist der Einsatz der vorliegenden Erfindung in Verbindung mit Dreh-Schwenkeinrichtung im Zusammenhang mit entsprechenden Koordinatenmessgeräten, wobei die Wechseleinrichtung an der Aufnahme für die Dreh-Schwenkeinrichtung und/oder an der Aufnahme für den Sensor an der Dreh-Schwenkeinrichtung vorgesehen sein kann.

Nachfolgend werden Einzelheiten der Erfindung an Hand des in den Figuren dargestellten Ausführungsbeispiels näher erläutert. Dabei zeigen:
- Figur 1:: eine perspektivische Ansicht eines Koordinatenmessgeräts in Portalbauweise mit an der Pinole des Koordinatenmessgeräts über eine Wechseleinrichtung aufgenommener Dreh-Schwenkeinrichtung und an der Dreh-Schwenkreinrichtung über eine weitere Wechseleinrichtung aufgenommenem Sensor, und
- Figur 2: einen Schnitt durch eine Wechseleinrichtung nach der vorliegenden Erfindung.

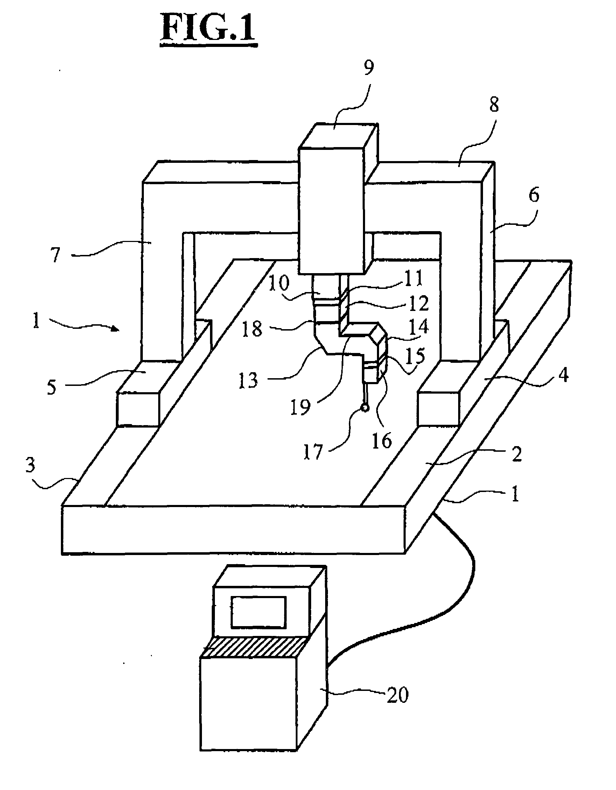

In der Figur 1 ist mit 1 ein Koordinatenmessgerät in Portalbauweise bezeichnet. Das Koordinatenmessgerät weist eine Granitplatte auf, an der Führungen (2, 3) vorgesehen sind, entlang derer das Messportal mit seinen Schlitten (4, 5) in einer Richtung computergesteuert verfahrbar ist. Auf den Schlitten (4, 5) ist über zwei Vertikalstützen (6, 7) die Traverse (8) aufgenommen. An der Traverse (8) wiederum ist der Querschlitten (9) aufgenommen, der längs der Traverse und damit senkrecht zur Richtung der Führungen (2, 3) ebenfalls computergesteuert verfahrbar ist. Am Querschschlitten (9) ist die Pinole (10) in der Vertikalen verfahrbar aufgenommen. Über eine Maschinensteuerung (20) mit Steuerungsrechner, Mikroprozessoren, Bedienfeld und Monitor wird die gesamte Maschine und die Bewegung der Pinole (10) in den drei zu einander senkrechten Raumrichtungen gesteuert.

An der Pinole (10) ist über eine erste Wechseleinrichtung (11) eine Dreh-Schwenkeinrichtung (12, 13, 14) aufgenommen. Die Dreh-Schwenkeinrichtung ermöglicht einerseits computergesteuerte Drehungen in einer zur Achse der Pinole (10) (Vertikalen) parallelen Achse um die Horizontalebene (18) und um eine zur Achse der Pinole (10) senkrechte Achse in der vertikalen Drehebene (19). Die Dreh-Schwenkeinrichtung kann dabei eine sogenannte kontinuierliche Dreh-Schwenkeinrichtung sein, die Drehbewegungen in den beiden Drehebenen (18, 19) um beliebige oder nahezu beliebige Drehwinkel ermöglicht, oder als sogenanntes rastendes Drehschwenkgelenk ausgebildet sein, bei dem die Drehbewegungen nur um fest vorgegebene Winkelinkremente möglich sind.

Über eine zweite Wechseleinrichtung (15) ist an der Dreh-Schwenkeinrichtung ein Sensor (16) mit daran aufgenommenem Taststift (17) aufgenommenen. Über die Dreh-Schwenkeinrichtung kann der Sensor (16) beliebig im Raum orientiert werden, je nach dem wie es die Messaufgabe gerade erfordert. Der Taststift (17) selbst kann wiederum über eine weitere Wechseleinrichtung am Sensor aufgenommen sein.

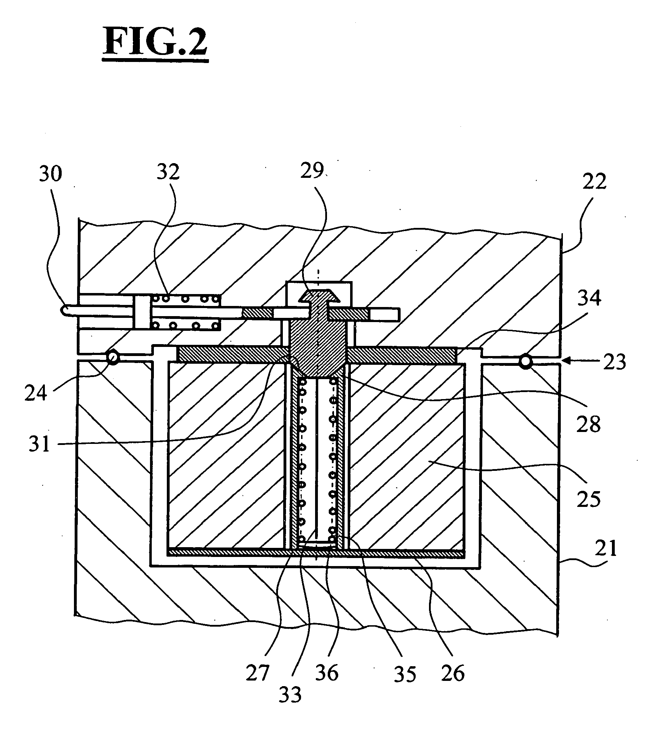

Der Aufbau der Wechseleinrichtungen (11, 15) ist in der Figur 2 im Schnitt dargestellt. Die Wechseleinrichtung hat eine Aufnahme (21), die ein erstes Lager trägt. Das Gegenstück (22), das an der Aufnahme (21) aufzunehmen ist, hat ein Gegenlager, das zu dem Lager der Aufnahme korrespondiert. Das Lager der Aufnahme (21) und das Lager des Gegenstücks (22) sind dabei so ausgebildet, dass sie gemeinsam ein Dreipunktlager bilden. Beispielsweise kann das Lager (23) der Aufnahme (21) drei jeweils um 120° versetzte Kugeln und das Lager des Gegenstücks (22) entsprechende Ausnehmungen aufweisen, die zu den Kugeln des ersten Lagers (23) so abgestimmt sind, dass das Gegenstück (22) immer reproduzierbar an der Aufnahme (21) aufgenommen wird. Um eine eventuelle Mehrdeutigkeit gegenüber einer Drehung um 120° in der durch das Lager definierten Ebene auszuschließen, kann eine Position noch über ein zusätzliches Element (24), beispielsweise eine Kugel mit einer zugeordneten Ausnehmung im Gegenstück (22) ausgezeichnet sein.

Als lösbare Spanneinrichtung (25) ist in einer Ausnehmung der Aufnahme (21) eine Kombination aus einem Elektromagneten und einem Permanentmagneten enthalten. Am Gegenstück (22) ist eine Ankerplatte (34) befestigt, die vom Magneten (25) angezogen wird. Wenn das Gegenstück (22) an der Aufnahme (21) aufgenommen ist, wird dieses entsprechend über Magnetkraft gehalten. Die Kombination aus Permanentmagnet und Elektromagnet liefert dabei den Vorteil, dass der Elektromagnet nur während des Wechselvorgangs aktiviert wird und im normalen Messbetrieb die Spannung ausschließlich über den Permanentmagneten erfolgt, sodass die Energiedissipation und damit die Erwärmung durch den Elektromagneten minimal ist. Der detaillierte Aufbau einer solchen magnetischen Wechseleinrichtung ist beispielsweise aus den eingangs genannten US 4637119, USA 4649623, US 4688307 und US 5041806 bekannt, auf die wegen weiterer Details verwiesen sei.

Alternativ zur magnetischen Spannung kann auch eine Spannung durch Unterdruck realisiert sein, wie dieses beispielsweise in der DE 38 27 656 beschrieben ist. In diesem Fall ist dann natürlich der Aufbau der Spanneinrichtung und damit auch der Aufbau der Aufnahme und des Gegenstücks (22) entsprechend abzuwandeln.

Für die Verriegelung der Wechseleinrichtung ist an der Aufnahme (21) ein als Zapfen ausgebildetes Verschlusselement (29) vorgesehen, das durch eine Bohrung der Ankerplatte (34) hindurchgreift. Das Verschlusselement (29) ist leicht angespitzt und weist eine Nut auf. Das Gegenstück weist in einer Ausnehmung einen durch eine Feder (32) vorgespannten Schieber (30) auf, der in die Nut des Verschlusselements (29) der Aufnahme eingreift. Das Verschlusselement (29) der Aufnahme weist etwa in Höhe der durch das Lager definierten Lagerebene eine konische Trennstelle (31) auf, d.h. das Verschlusselement ist trennbar in einem als konische Ausnehmung ausgebildeten Sitz an der Aufnahme aufgenommen. Der Sitz für das Versclilusselement befindet sich dabei an einem Röhrchen (27), das auf seiner zum aufzunehmenden Bauteil zugerichteten Seite eine zur konischen Außenfläche des durch die Ankerplatte hindurchgreifenden Verschlusselements (29) korrespondierende konische Innenfläche hat. Im Inneren des Röhrchens (27) ist eine Druckfeder (35) und darin ein Seil (33) geführt, das mit dem durch die Öffnung der Ankerplatte (34) hindurch greifenden Verschlusselement (29) verbunden ist, und auf dem gegenüberliegenden Ende mit einem Spannelement (36) verbunden ist. Das Spannelement ist im Rohr (27) gleitend geführt.

Beim Aufnehmen des Gegenstücks (22) wird zunächst die Aufnahme (21) so relativ zum Gegenstück (22) positioniert, dass das Verschlusselement (29) der Aufnahme (21) durch das Loch in der Ankerplatte (34) hindurchfährt und beim weiteren aufeinander zu bewegen durch die Spitze des Verschlusselements den Schieber (30) zur Seite drückt und dadurch die Verriegelungseinrichtung öffnet. Der Schieber (30) rastet dann, wenn das Verschlusselement so weit eingeführt ist, dass die Nute die Höhe des Schiebers (30) erreicht, durch seine Vorspannung in die Nute im Verschlusselement ein. Die Abmessungen der Nute im Verschlusselement (29) relativ zum Schieber (30) sind dabei so gewählt, dass die Verrieglungseinrichtung keine Spannkraft auf das Lager (23) zwischen der Aufnahme (21) und dem Gegenstück (22) erzeugt. Der Schieber (30) und die Nute im Verschlusselement (29) haben dazu ein hinreichend großes Spiel. Denn die Spannung zwischen Aufnahme (21) und Gegenstück (22) soll ausschließlich mit Hilfe des Magneten (25) erfolgen, damit die Reproduzierbarkeit der Aufnahme gewährleistet ist.

Durch die Verriegelungseinrichtung ist ein unbeabsichtigtes Abwerfen des aufgenommenen Bauteils gewährleistet. Selbst wenn der Magnet (25) auf Abwerfen des aufgenommenen Bauteils (22) geschaltet wird, bleibt die Verrieglungseinrichtung in Eingriff mit dem Verschlusselement (29), solange der Schieber (30) nicht gegen die Kraft der Feder (32) gedrückt wird.

Ist hingegen ein Wechseln gewünscht und die geeignete Magazinposition angefahren, so drückt die Wand oder ein anderes dafür vorgesehenes Bauteil des Magazins gegen den Schieber (30) und entriegelt die Verriegelungseinrichtung. Durch nachfolgendes Lösen der Magnetkraft, indem der Elektromagnet so angesteuert wird, dass er die Magnetkraft des Permanentmagneten kompensiert oder überkompensiert, können dann die Aufnahme (21) und das Gegenstück (22) voneinander getrennt werden.

Im Falle einer unbeabsichtigten Kollision, also wenn beispielsweise gegen das Gegenstück (22) von der Seite Kräfte einwirken, die größer als die magnetische Haltekraft (größer als die Haltekraft der Spanneinrichtung) sind, so wird das Gegenstück (22) aus dem Lager (23) herausgehoben. Dabei wird gleichzeitig das Verschlusselement (29) an der Trennstelle (31) vom Rohr (27) getrennt. Bei weiter zunehmenden Kräften wird dann das am Verschlusselement (29) befestigten Seil (33) gegen die Kraft der Druckfeder (35) nach oben gezogen. Dabei gleitet das Spannelement (36) in dem Rohr (27) nach oben in Richtung auf die Lagerebene zu. Das Verschlusselement (29) bleibt dabei ständig über das Seil (33) mit der Aufnahme (21) verbunden. Durch die Ausbildung des Sicherungselements durch ein Seil (33), das durch die Druckfeder (35) vorgespannt ist, wird eine Überdehnung der Feder (35) ausgeschlossen.

Die vom Sicherungselement erzeugte Spannkraft auf das Verschlusselement (29) ist vorzugsweise kleiner als die Spannkraft, mit der das Gegenstück (22) über die Spanneinrichtung (25) an der Aufnahme gehalten wird.

Die Aufnahme und das Gegenstück weisen weiterhin nicht dargestellte Kontaktstifte auf, die zueinander korrespondieren und mittels der eine Trennung zwischen der Aufnahme (21) und dem Gegenstück (22) detektiert wird. Im Kollisionsfall, wenn also das Gegenstück (22) aus dem Lager (23) herausgehoben wird, wird dieses durch die Unterbrechung der Kontakte registriert. Die Maschinensteuerung schaltet dann schlagartig die Antriebe ab, wobei die Pinole noch einen gewissen Nachlauf hat, bis sie zum Stillstand kommt. Der Bewegungsweg, den das Sicherungselement für eine Trennung des Verschlusselements (29) an der Trennstelle (31) zulässt, ist so bemessen, dass bei maximaler Vorschubbewegung der Maschinenantriebe nach der Detektion des Kollisionsfalls der Stillstand der Maschinenantriebe erreicht wird, bevor die durch das Sicherungselement ermöglichte maximale Trennung des Verschlusselements an der Trennstelle erreicht wird. Die durch die Feder erzeugte Vorspannung des Sicherungselements ist dabei so ausgelegt, dass selbst bei maximaler Stauchung der Druckfeder die auftreten Kräfte so gering sind, dass keine Beschädigungen auftreten. Auf diese Weise werden auch im Kollisionsfall Beschädigungen an der Maschine oder an dem aufgenommenen Gegenstück vermieden.

Die Aufnahme (21) kann an der Pinole des Koordinatenmessgeräts angeordnet sein. In diesem Fall wäre das Gegenstück (22) entweder an einer Dreh-Schwenkeinrichtung oder an einem an der Pinole aufzunehmenden Sensor angeordnet. Alternativ kann die Aufnahme (21) auch an einer Dreh-Schwenkeinrichtung angeordnet sein; in diesem Fall wäre wieder das aufzunehmende Gegenstück (22) an einem Sensor angeordnet, der an der Dreh-Schwenkeinrichtung aufzunehmen ist.

Die Spanneinrichtung (25) kann wie in der Figur 2 dargestellt in einer Ausnehmung der Aufnahme (21) angeordnet sein. Es ist jedoch auch möglich, die Spanneinrichtung (25) in einer Ausnehmung des Gegenstücks (22) anzuordnen.

Auf die Feder (35) zur Vorspannung des das Sicherungselement bildenden Seils (33) kann verzichtet werden, wenn sichergestellt ist, dass auch ohne Vorspannung des Seils (33) die Trennstelle (31) beim Wechselvorgang geschlossen ist. Dieses lässt sich beispielsweise erreichen, wenn die Aufnahme (21) beim Wechselvorgang immer vertikal nach oben steht. Durch die Vorspannung des Sicherungselements (33) lässt sich jedoch gewährleisten, dass die Trennstelle im Normalfall (also wenn keine Kollision eingetreten ist) bei beliebiger Orientierung der Wechseleinrichtung im Raum geschlossen ist.

Anstelle einer Druckfeder für die Vorspannung des Sicherungselements (33) kann natürlich auch eine Zugfeder zum Einsatz kommen. Alternativ ist es auch denkbar, die Vorspannkraft pneumatisch, hydraulisch oder durch Magnetkraft zu erzeugen. Alternativ ist es weiterhin möglich, dass Sicherungselement (33) als elastisches Seil, beispielsweise als starkes Gummiseil, auszubilden und dieses auf der dem Sicherungselement (29) abgewandten Seite fest an der Aufnahme (21) zu befestigen.

Anhand der Figur 1 wurde die Erfindung am Beispiel eines Koordinatenmessgeräts in Portalbauweise erläutert. Die erfindungsgemäße Wechseleinrichtung ist jedoch ebenso bei Koordinatenmessgeräten in so genannter Ständerbauweise oder auch bei Bearbeitungsmaschinen einsetzbar.

## Patentansprüche

1. Wechseleinrichtung (11, 15) zur auswechselbaren Aufnahme eines Sensors (16), Tastelements (17) oder Werkzeugs an einer Maschine oder einem Maschinenteil, mit
a) einer Aufnahme (21), die ein erstes Lager (23) aufweist,
b) einem an der Aufnahme (21) aufnehmbaren Gegenstück (22), das ein zweites, zum ersten Lager (23) korrespondierendes Gegenlager aufweist,
c) einer lösbaren Spanneinrichtung (25), die bei an der Aufnahme (21) aufgenommenem Gegenstück (22) eine Spannkraft zwischen dem ersten Lager (23) und dem Gegenlager erzeugt,
**gekennzeichnet durch**
d) eine Verriegelungseinrichtung, die ein erstes Verschlusselement (29) an der Aufnahme (21) und ein zweites, zum ersten Verschlusselement (29) korrespondierendes Verschlusselement (30) am Gegenstück (22) aufweist, und mit der das Gegenstück (22) im an der Aufnahme (21) aufgenommenen Zustand mit der Aufnahme (21) mechanisch koppelbar ist,
e) wobei das erste Verschlusselement (29) eine Trennstelle (31) an der Aufnahme (21) aufweist, so dass das erste Verschlusselement (29) von der Aufnahme (21) trennbar ist, und
f) ein Sicherungselement (33) vorgesehen ist, **durch** das eine Trennung des ersten Verschlusselements (29) an der Trennstelle (31) auf eine vorbestimmte Distanz begrenzt ist.

2. Wechseleinrichtung (11, 15) nach Anspruch 1, wobei die Aufnahme (21) am Sensor (16), am Tastelement (17) oder am Werkzeug angeordnet ist.

3. Wechseleinrichtung (11, 15) nach Anspruch 1, wobei das Gegenstück (22) am Sensor (16), am Tastelement (17) oder am Werkzeug angeordnet ist.

4. Wechseleinrichtung (11, 15) nach Anspruch 1 oder 2, wobei das Sicherungselement (33) ein Seil ist.

5. Wechseleinrichtung (11, 15) nach Anspruch 4, wobei das Seil (33) elastisch ist.

6. Wechseleinrichtung (11, 15) nach Anspruch 4, wobei das Seil (33) vorgespannt ist.

7. Wechseleinrichtung (11, 15) nach Anspruch 6, wobei für die Vorspannung des Seils (33) eine Druckfeder (35) vorgesehen ist.

8. Wechseleinrichtung (11, 15) nach einem der Ansprüche 1 bis 7, wobei die Trennstelle (31) des Verschlusselements (29) als konische oder sphärische Trennstelle ausgeführt ist.

9. Wechseleinrichtung (11, 15) nach einem der Ansprüche 1 bis 8, wobei das Verschlusselement (29) des Gegenstücks (22) ein vorgespannter Schieber (30) ist.

10. Koordinatenmessgerät (1) mit einer in ein oder mehreren Raumrichtungen computergesteuert bewegbaren und/oder um eine oder mehrere Raumrichtungen computergesteuert drehbaren Aufnahme (21) für einen Sensor (16) und mit einer Wechseleinrichtung (11, 15) nach einem der Ansprüche 1 bis 9.

11. Koordinatenmessgerät (1) mit einer in ein oder mehreren Raumrichtungen computergesteuert bewegbaren Aufnahme für eine Dreh-Schwenkeinrichtung (12, 13, 14), die Drehbewegungen eines an der Dreh-Schwenkeinrichtung (12, 13, 14) aufgenommenen Sensors (16) um zwei zueinander senkrechte Achsen (18, 19) computergesteuert ermöglicht und mit einer Wechseleinrichtung (11, 15) nach einem der Ansprüche 1 bis 9 an der Aufnahme für die Dreh-Schwenkeinrichtung (12, 13, 14) und/oder der Aufnahme für den Sensor (16) an der Dreh-Schwenkeinrichtung (12, 13, 14).

## Claims

1. Changing device (11, 15) for exchangeably holding a sensor (16), probe element (17) or tool on a machine or a machine part, having
a) a holder (21) which has a first bearing (23),
b) a mating component (22) which can be held on the holder (21) and has a second, mating bearing corresponding to the first bearing (23),
c) a detachable clamping device (25) which produces a clamping force between the first bearing (23) and the mating bearing when a mating component (22) is held on the holder (21),
**characterized by**
d) a locking device which has a first sealing element (29) on the holder (21), and a second sealing element (30), corresponding to the first sealing element (29), on the mating component (22), and with which the mating component (22) can be mechanically coupled to the holder (21) in the state held on the holder (21),
e) the first sealing element (29) having a joint (31) on the holder (21) such that the first sealing element (29) can be separated from the holder (21), and
f) a safety element (33) by means of which a separation of the first sealing element (29) at the joint (31) is restricted to a predetermined distance.

2. Changing device (11, 15) according to Claim 1, in which the holder (21) is arranged on the sensor (16), on the probe element (17) or on the tool.

3. Changing device (11, 15) according to Claim 1, in which the mating component (22) is arranged on the sensor (16), on the probe element (17) or on the tool.

4. Changing device (11, 15) according to Claim 1 or 2, in which the safety element (33) is a cable.

5. Changing device (11, 15) according to Claim 4, in which the cable (33) is elastic.

6. Changing device (11, 15) according to Claim 4, in which the cable (33) is prestressed.

7. Changing device (11, 15) according to Claim 6, in which a compression spring (35) is provided for prestressing the cable (33).

8. Changing device (11, 15) according to one of Claims 1 to 7, in which the joint (31) of the sealing element (29) is designed as a conical or spherical joint.

9. Changing device (11, 15) according to one of Claims 1 to 8, in which the sealing element (29) of the mating component (22) is a prestressed slider (30).

10. Coordinate measuring machine (1) having a holder (21) which can be moved under computer control in one or more spatial directions and/or can be rotated under computer control about one or more spatial directions, for a sensor (16), and having a changing device (11, 15) according to one of Claims 1 to 9.

11. Coordinate measuring machine (1) having a holder, which can be moved under computer control in one or more spatial directions, for a rotating/swivelling device (12, 13, 14) which enables under computer control rotary movements of a sensor (16), held on the rotating/swivelling device (12, 13, 14), about two mutually perpendicular axes (18, 19), and having a changing device (11, 15) according to one of Claims 1 to 9 on the holder for the rotating/swivelling device (12, 13, 14), and/or on the holder for the sensor (16) on the rotating/swivelling device (12, 13, 14).

## Revendications

1. Dispositif de remplacement (11, 15) pour recevoir de manière interchangeable un capteur (16), un élément de palpage (17) ou un outil sur une machine ou une pièce de machine, comprenant :
a) un logement (21) qui présente un premier palier (23),
b) une pièce conjuguée (22) pouvant être reçue sur le logement (21), qui présente un deuxième palier conjugué correspondant au premier palier (23),
c) un dispositif de serrage desserrable (25), qui produit une force de serrage entre le premier palier (23) et le palier conjugué lorsque la pièce conjuguée (22) est reçue sur le logement (21),
**caractérisé par**
d) un dispositif de verrouillage, qui présente un premier élément de fermeture (29) sur le logement (21) et un deuxième élément de fermeture (30) sur la pièce conjuguée (22), correspondant au premier élément de fermeture (29), et avec lequel la pièce conjuguée (22) peut être accouplée mécaniquement avec le logement (21) dans l'état reçu sur le logement (21),
e) le premier élément de fermeture (29) présentant une zone de séparation (31) sur le logement (21), de sorte que le premier élément de fermeture (29) puisse être séparé du logement (21), et
f) un élément de fixation (33) étant prévu, lequel permet de limiter à une distance prédéterminée une séparation du premier élément de fermeture (29) au niveau de la zone de séparation (31).

2. Dispositif de remplacement (11, 15) selon la revendication 1, dans lequel le logement (21) est disposé sur le capteur (16), sur l'élément de palpage (17) ou sur l'outil.

3. Dispositif de remplacement (11, 15) selon la revendication 1, dans lequel la pièce conjuguée (22) est disposée sur le capteur (16), sur l'élément de palpage (17) ou sur l'outil.

4. Dispositif de remplacement (11, 15) selon la revendication 1 ou 2, dans lequel l'élément de fixation (33) est un câble.

5. Dispositif de remplacement (11, 15) selon la revendication 4, dans lequel le câble (33) est élastique.

6. Dispositif de remplacement (11, 15) selon la revendication 4, dans lequel le câble (33) est précontraint.

7. Dispositif de remplacement (11, 15) selon la revendication 6, dans lequel on prévoit un ressort de compression (35) pour la précontrainte du câble (33).

8. Dispositif de remplacement (11, 15) selon l'une quelconque des revendications 1 à 7, dans lequel la zone de séparation (31) de l'élément de fermeture (29) est réalisée sous forme de zone de séparation conique ou sphérique.

9. Dispositif de remplacement (11, 15) selon l'une quelconque des revendications 1 à 8, dans lequel l'élément de fermeture (29) de la pièce conjuguée (22) est un coulisseau précontraint (30).

10. Appareil de mesure de coordonnées (1) comprenant un logement (21) pour un capteur (16) déplacable dans une ou plusieurs directions spatiales par commande par ordinateur ou pouvant tourner autour d'une ou plusieurs directions spatiales par commande par ordinateur, et comprenant un dispositif de remplacement (11, 15) selon l'une quelconque des revendications 1 à 9.

11. Appareil de mesure de coordonnées (1) comprenant un logement (21) pour un dispositif pivotant-rotatif (12, 13, 14) déplaçable dans une ou plusieurs directions spatiales par commande par ordinateur, qui permet des mouvements de rotation d'un capteur (16) reçu sur le dispositif pivotant-rotatif (12, 13, 14) autour de deux axes (18, 19) perpendiculaires l'un à l'autre, par commande par ordinateur, et comprenant un dispositif de remplacement (11, 15) selon l'une quelconque des revendications 1 à 19, sur le logement pour le dispositif pivotant-rotatif (12, 13, 14) et/ou le logement pour le capteur (16) sur le dispositif pivotant-rotatif (12, 13, 14).
